Europäisches Patentamt

(19) European Patent Office

Office européen des brevets

(11) Publication number : **0 491 514 A1**

(12) **EUROPEAN PATENT APPLICATION**

(21) Application number : **91311397.3**

(22) Date of filing : **06.12.91**

(51) Int. Cl.$^5$ : **H02G 7/20, H02G 7/05**

(30) Priority : **18.12.90 GB 9027320**

(43) Date of publication of application :
**24.06.92 Bulletin 92/26**

(84) Designated Contracting States :
**ES FR IT**

(71) Applicant : **PIRELLI GENERAL plc**
**40 Chancery Lane**
**London WC2A 1JH (GB)**

(72) Inventor : **Craddock, Keith**
**144 Mild May Road**
**Chelmsford, Essex CM2 0EE (GB)**
Inventor : **Bokota, Jerzy**
**60 Norten Avenue, Tolworth**
**Surbiton, Surrey KT5 9DY (GB)**
Inventor : **McKenzie, William**
**Markham View, Sibthorpe Hill**
**Tuxford, Notts. NG22 0PJ (GB)**

(74) Representative : **Abbie, Andrew Kenneth et al**
**R.G.C. Jenkins & Co. 26 Caxton Street**
**London SW1H 0RJ (GB)**

(54) **Cable support.**

(57)    A hanger device for installing an aerial optical
fibre cable on an electric power pylon com-
prises a pair of angled rod members (10) sus-
pended from mounting eyes (26) on the pylon
and carrying a cable clamp (33) coupled to the
support members via a shackle (22). The ar-
rangement is simple to install and overcomes
the problem of close tolerance machining as-
sociated with previous hanger devices.

Fig.2.

EP 0 491 514 A1

This invention relates to a support arrangement for an aerial cable, e.g. a fibre optic cable.

Fibre optic cables are finding increasing application as transmission media for speech or data signals. A recent developement in this area has been the introduction of aerial cables carried on the pylon or tower supports of electric power transmission lines. This has of course introduced the problem of supporting the cable on each tower. The support must be of sufficient strength to carry not only the weight of the cable itself but also a possible ice loading of about 0.5 tonne at each support point. Further allowance must be made for wind loading. It has been found that the tower cross-braces, which are not designed for the purpose do not have sufficient strength to withstand winds of this order and it is therefore necessary to provide a purpose-constructed support fitment.

Conventionally, an aerial cable is supported on a rigid steel beam secured to the pylon and aligned with the direction of the cable, which is suspended on a hanger carried on the beam. Fitment of the beam involves climbing the tower to make an accurate measurement of the spacing bnetween the cross-members to which the beam is to be secured. The beam is then marked and drilled to provide fixing points for securement to the cross-members. Drilling of the beam is a ground-based operation, as the tower must be ascended a second time for fitment of the beam. Also, when the drilling has been performed accurately, further machining of the beam may be necessary to achieve fitment. these operations are time-consuming and require operators of reasonable skill. The difficulty of the conventional technique is of course exacerbated in bad weather conditions.

The object of the invention is to minimise or to overcome this disadvantage.

According to the invention there is provided a cable hanger device for supporting an aerial cable passing through an electric power transmission pylon, which pylon has a generally rectangular or square cross-section, the hanger device including first and second angled rod support members each having a mounting structure found at each of its free ends, said mounting structures being adapted to engage corresponding mounts disposed on the pylon, the support members being such that, when mounted on the pylon, their angled portions may be brought together whereby to provide a mounting point for which the cable may be supported.

An embodiment of the invention will now be described with reference to the accompanying drawings in which:-

Fig. 1 is a general view of a cable support member;

Fig. 2 is a plan view of a pair of cable support members fitted to a pylon structure;

Fig. 3 shows the mounting detail of the structure of Fig. 2; and

Fig. 4 illustrates a cable clamping technique for securing an aerial cable to the support structure of Fig. 2.

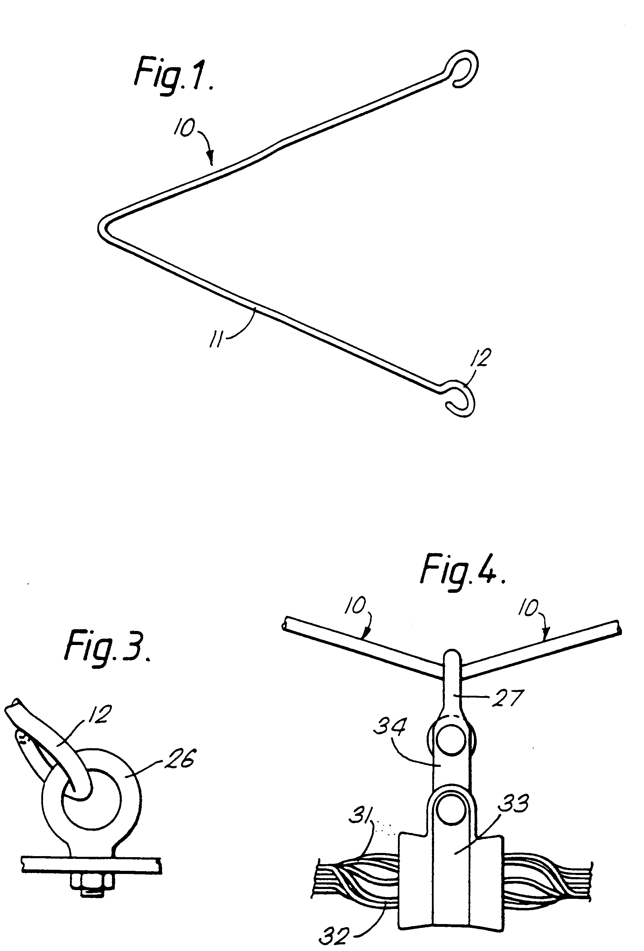

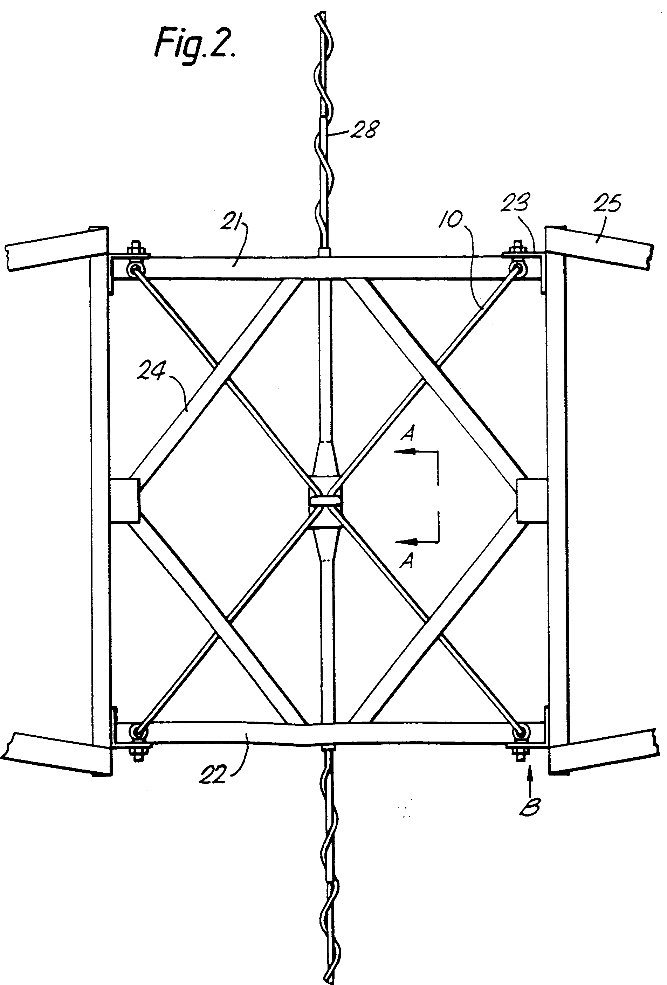

Referring to Fig. 1, each support member 10 comprises an angled resilient, e.g. steel, rod 11 having a mounting hook 12 formed at each free end whereby, in use, the support member may be mounted on a pylon. The support member is generally symmetrical and is so dimensioned that, when mounted via the mounting hooks 12 on a pylon of rectangular or square cross-section, the angled portion may be brought adjacent the angled portion of a similar support member.

Fig. 2 illustrates the manner in which a pair of the support members 10 of Fig. 1 are mounted on a power transmission pylon. The pylon is generally rectangular or square in cross-section and has cross members 21, 22 secured to generally vertical support legs 23. Cross-braces 24 may also be provided to stiffen the structure. As shown in Fig. 2, the support structure is mounted at the level of the bottom cross-arms 25, but it will be appreciated that mounting may be effected at any convenient level on the pylon.

Each support member 10 is retained on corresponding fixing eyes, e.g. eye-bolts 26 (Fig. 3) mounted adjacent the corners of the pylon. Preferably the eye-bolts 26 are secured to the legs 23 of the pylon to ensure maximum strength. In many cases no drilling of the pylon will be necessary as each eye-bolt 26 can simply replace a corresponding fixing bolt.

The dimensions of the support members 10 are such that, when each support member is mounted with its hook portions 12 each engaging a corresponding eye 26, the angled portions of the two support members may be brought together whereby to be coupled by a shackle 27 (Fig. 4) to provide a hanger for a fibre optic cable 28. The angled portions, when coupled by the shackle, are disposed somewhat below the plane of the hook positions. Typically the legs of each support member subtend an angle of about 15° to the horizontal. The precise angle is of course determined by the relative dimensions of the support members and the pylon. The arrangement thus compensates for dimensional tolerance.

The fibre optic aerial cable 28 may be prepared for mounting on the shackle 27 by providing external stiffening around the mounting point to spread the force on the cable and reduce bending of the cable at the support point. Typically this stiffening comprises one or more layers of helically preformed metal, e.g. aluminium, rods or wires 31 (Fig. 4).

At the support point of the cable, plastics, e.g. neoprene, inserts 32 are trapped between the rods or wires 31 to provide an enlarged diameter resilient region to which a clamp 33 suspended from the shackle 27 via a link plates 34 is secured to support the cable.

Advantageously the spans of cable between adjacent pylons are provided with a helical wire overwind to effect vibration damping under high wind conditions.

It will be appreciated that the cable hanger arrangement is relatively cheap to manufacture and eliminates the need for on-site close tolerance machining. Furthermore, the hanger arrangement facilitates the installation of an aerial cable by relatively unskilled staff.

## Claims

1. A cable hanger device for supporting an aerial cable passing through an electric power transmission pylon, which pylon has a generally rectangular or square cross-section, the hanger device including first and second angled rod support members each having a mounting structure found at each of its free ends, said mounting structures being adapted to engage corresponding mounts disposed on the pylon, the support members being such that, when mounted on the pylon, their angled portions may be brought together whereby to provide a mounting point for which the cable may be supported.

2. A hanger device as claimed in claim 1, and incorporating a cable clamp assembly comprising a shackle linking the angled portions of the mounting members and a cable clamp suspended from the shackle.

3. A hanger device as claimed in claim 2, wherein the cable clamp is adapted to engage an enlarged diameter region formed on the cable.

4. A hanger device as claimed in claim 1, 2 or 3, wherein the free ends of the support members are formed each into hook portions adapted to engage corresponding mounting eyes secured to the pylon.

5. An aerial optical fibre cable supported from pylons by hanger devices as claimed in any one of claims 1 to 4.

Fig.1.

Fig.3.

Fig.4.

# Fig.2.

EP 0 491 514 A1

**European Patent Office**

**EUROPEAN SEARCH REPORT**

Application Number

EP 91 31 1397

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 540 046 (LICENTIA PATENT VERWALTUNGS) * page 3, paragraph 3 - page 4, last paragraph; figures 1,2 * | 1 | H02G7/20 H02G7/05 |
| | --- | | |
| A | FR-A-1 559 124 (COMPAGNIE GENERALE) * figure 1 * | 1 | |
| | ----- | | |
| | | | **TECHNICAL FIELDS SEARCHED (Int. Cl.5)** |
| | | | H02G H05G |

The present search report has been drawn up for all claims

| Place of search | Date of completion of the search | Examiner |
|---|---|---|
| THE HAGUE | 10 MARCH 1992 | RIEUTORT A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)